# EUROPEAN PATENT SPECIFICATION

(11) **EP 3 839 735 B1**
(45) Date of publication and mention of the grant of the patent: **22.11.2023**
(21) Application number: 19856197.9
(22) Date of filing: 18.07.2019
(51) Int. Cl.: G06F 9/50

(54) **MEMORY MANAGEMENT METHOD AND DEVICE FOR BROWSER, TERMINAL, AND STORAGE MEDIUM**
SPEICHERVERWALTUNGSVERFAHREN UND -VORRICHTUNG FÜR BROWSER, ENDGERÄT UND SPEICHERMEDIUM
PROCÉDÉ ET DISPOSITIF DE GESTION DE MÉMOIRE POUR NAVIGATEUR, TERMINAL ET SUPPORT D'ENREGISTREMENT

(30) Priority: 28.08.2018 CN 201810990014
(43) Date of publication of application: 23.06.2021
(73) Proprietor: GUANGDONG OPPO MOBILE TELECOMMUNICATIONS CORP., LTD., Dongguan Guangdong 523860 (CN)
(72) Inventor: ZHAO, Jianping, Dongguan, Guangdong 523860 (CN)
(74) Representative: Mewburn Ellis LLP
(86) International application number: PCT/CN2019/096592
(87) International publication number: WO 2020/042818

(56) References cited:
- CN-A- 101 080 055
- CN-A- 103 634 337
- CN-A- 109 117 274
- US-A1- 2006 209 695
- US-A1- 2013 061 234
- US-A1- 2014 033 213
- US-B2- 9 311 236
- Ilya Grigorik: "High Performance Networking in Google Chrome - igvita.com", , 31 January 2013 (2013-01-31), XP055133377, Retrieved from the Internet: URL:https://www.igvita.com/posa/high-perfo rmance-networking-in-google-chrome/ [retrieved on 2014-08-05]

## Description

### TECHNICAL FIELD

This disclosure relates to the field of browser technology, and more particularly to a method and device for memory management for a browser, a terminal, and a storage medium.

### BACKGROUND

Browser is software that can display hypertext markup language (HTML) files.

During running of the browser, due to the increasing number of web pages opened with the browser, memory occupied by the browser is also increasing. At this time, available memory of a terminal is decreasing, which leads to the browser opening web pages more slowly, even makes the browser unresponsive.

US2014033213A1 relates to a system and method for automatic memory management of a shared memory during parallel processing of a web application. The system includes a computing system configured to allow parallel computing of a web application executed within a web browser. The computing system includes shared memory having a set of blocks distributed at least a first thread and at least one spawned thread of a processing function of the web application. The memory is partitioned into a nursery heap, a mature heap and a database having a plurality of private nurseries, wherein the first thread has access to the nursery heap and mature heap and the at least one spawned thread has access to an associated one of the plurality of private nurseries. During parallel computing of the web application, management of the shared memory includes garbage collection of at least each of the plurality of private nurseries.

US2013061234A1 relates to systems for managing computer resources available to multiple running instances of a media player program. The methods include monitoring consumption of computing resources of multiple running instances of a media player program to render respective media content in a graphical user interface of a computing device. The graphical user interface associated with an additional program configured to render additional content, different from the media content, to the graphical user interface. The additional program can be a browser. The methods further include instructing the multiple instances to reduce respective portions of the computing resources consumption upon determining that a requested increase in computer resources consumption of the media player program would cause the computer resources consumption of the media player program to exceed a first predetermined level.

### SUMMARY

According to one aspect, a method according to claim 1, a terminal according to claim 4 and a computer-readable storage medium according to claim 5 are provided.

During the running of the browser, the method includes monitoring whether the operating system of the terminal running the browser fails to allocate the memory to the browser. Upon monitoring that the operating system fails to allocate the memory to the browser, the redundant memory of the browser is released in time. As such, there will always be sufficient available memory for the browser, which can avoid the slow response or even failure of the browser due to insufficient memory, so as to improve the performance of the browser.

### BRIEF DESCRIPTION OF THE DRAWINGS

FIG. 1 is a flow chart illustrating a method for memory management for a browser according to implementations.
FIG. 2 is a schematic diagram illustrating running of a browser according to implementations.
FIG. 3 is a flow chart illustrating a method for memory management for a browser according to other implementations.
FIG. 4 is a flow chart illustrating a method for memory management for a browser according to other implementations.
FIG. 5 is a flow chart illustrating a device for memory management for a browser according to implementations.
FIG. 6 is a block diagram illustrating a terminal according to implementations.

### DETAILED DESCRIPTION

For better understanding of objects, technical solutions, and advantages of the disclosure, the following will describe implementations of the disclosure in detail in conjunction with accompanying drawings. In the present disclosure, it is to be noted that the embodiments that are not covered by the appended set of claims are not part of the invention. The technical features that are present in the independent claims are essential for the invention.

According to the technical solutions provided by implementations of the disclosure, during running of a browser, monitor whether an operating system of a terminal running the browser fails to allocate memory to the browser. Upon monitoring that the operating system fails to allocate the memory to the browser, redundant memory of the browser is released in time. As such, there will always be sufficient available memory for the browser, which can avoid the slow response or even failure of the browser due to insufficient memory, so as to improve the performance of the browser.

In the technical solutions provided herein, various steps may be performed by a terminal. The above-described terminal may be a mobile phone, a personal computer (PC), a tablet computer, an e-book reader, a multi-media playback device, a wearable device, or other electronic devices.

A browser is installed in the terminal. All steps may be performed by the browser. The browser is software that can display contents of HTML files of a web server or a file system and allow users to interact with the contents. For example, the browser is Firefox^{®} browser, Chrome° browser, Opera° browser, UC° browser, or the like.

For the convenience of description, in following implementations of the method, the browser is taken as an example for performing various steps. The disclosure is not limited thereto.

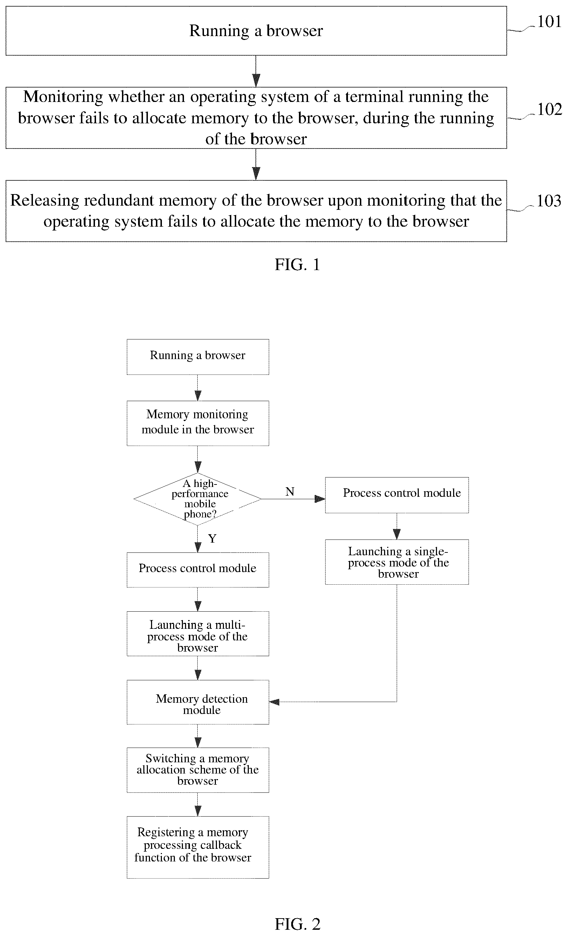

FIG. 1 is a flow chart illustrating a method for memory management for a browser according to implementations. As illustrated in FIG. 1, the method begins at block 101.

At block 101, run the browser.

If a user wants to run the browser, the user can click an icon of the browser in a terminal, such that the terminal can run the browser according to an operation signal received, which acts on the icon of the browser.

In one example, the terminal can run the browser according to a running mode of the browser, where the running mode of the browser is determined according to a memory size of the terminal running the browser. In at least one implementation, operations at block 101 include operations at block 101a to block 101c.

At block 101a, upon receiving a running instruction for the browser, memory information of the terminal is obtained.

The memory information is indicative of the memory size. The memory size of the terminal may be 3 giga byte (GB), 4GB, 6GB, 8GB, or the like, which is not limited herein.

At block 101b, a running mode of the browser is determined according to the memory information obtained.

The running mode of the browser is a multi-process mode or a single-process and multi-thread mode. The process is a basic unit for allocating and managing resources during execution of concurrent programs. The thread is an execution unit in a process, and is a basic unit that is smaller than the process and can run independently. The thread is also termed as a "lightweight process".

For example, when the running mode of the browser is the multi-process mode, the browser includes multiple processes that are executed concurrently. The multiple processes may include a main process (e.g., a browser process), a renderer process, a third party plug-in process, a graphics processing unit (GPU) process, and the like. For another example, when the running mode of the browser is the single-process and multi-thread mode, the browser includes one process, and multiple threads are executed concurrently in a process space of the process. The multiple threads include a main thread (e.g., a browser thread), a renderer thread, a third party plug-in thread, a GPU thread, and the like. Compared with the single-process and multi-thread mode, when the browser runs in the multi-process mode, high security and stability can be achieved, but more memory are occupied.

In some implementations, when the memory size indicated by the memory information is greater than a first threshold, determine that the running mode of the browser is the multi-process mode. In other implementations, when the memory size is less than a second threshold, determine that the running mode of the browser is the single-process and multi-thread mode. The first threshold is greater than the second threshold.

The first threshold and the second threshold can be set according to experience. The disclosure is not limited thereto. In one example, the first threshold is 6GB and the second threshold is 4GB.

Different memories are required in different running modes. In implementations of the disclosure, for a terminal having a relatively large memory, the browser can run in the multi-process mode to enable safety and stability. In contrast, for a terminal having a relatively small memory, the browser can run in the single-process and multi-thread mode, such that the browser requires a relatively small memory. Since the running mode of the browser is determined according to the memory size of the terminal, different performance requirements of the browser can be met, which is more flexible.

At block 101c, run the browser according to the running mode of the browser.

As an example, when the running mode of the browser is the multi-process mode, run the browser according to the multi-process mode. As another example, when the running mode of the browser is the single-process and multi-thread mode, run the browser according to the single-process and multi-thread mode.

At block 102, whether an operating system of the terminal running the browser fails to allocate memory to the browser is monitored, during running of the browser.

During running of the browser, the browser starts a memory detection mechanism. When the browser requests from the operating system memory required for running, if the operating system determines that a memory size of available memory of the terminal is less than that of the memory requested by the browser, a memory processing callback function registered in advance may be invoked to send an allocation failure notification to the browser. The allocation failure notification is for indicating that the operating system fails to allocate the memory to the browser.

In addition, to allow the browser to register in advance the memory processing callback function, before running the browser, it is necessary to load a memory allocation scheme customized by developers rather than a memory allocation scheme in the system.

FIG. 2 is a schematic diagram illustrating running of a browser according to implementations. As illustrated in FIG.2, when the terminal receives the running instruction for the browser, a memory monitoring module in the browser determines whether the terminal is a high-performance mobile phone. As an example, if the terminal is a high-performance mobile phone, a process control module in the browser determines that the browser runs in the multi-process mode. On the other hand, if the terminal is not a high-performance mobile phone, the process control module determines that the browser runs in the single-process and multi-thread mode, and switches a memory allocation scheme from the memory allocation scheme in the system to the memory allocation scheme customized by developers, and then registers the memory processing callback function.

At block 103, redundant memory of the browser is released upon monitoring that the operating system fails to allocate the memory to the browser.

In at least one implementation, the redundant memory includes one or more of the following: memory occupied by a kernel of the browser, memory occupied during picture decoding, memory occupied by scripts, memory occupied by cascading style sheets (CSS), memory occupied during script parsing, or memory occupied by a GPU.

The kernel of the browser is also known as a rendering engine, and is configured to determine how the browser displays contents of a web page and a format of the web page. The script is a program saved in a plain text format, and used to determine a series of actions that control a computer to carry out operations. When executed, the script needs to be translated into machine-recognizable instructions by an interpreter. The CSS is a computer language used to describe styles for presenting files written in a markup language such as HTML or extensible markup language (XML). The memory occupied during script parsing is the memory occupied during script translation. The GPU, which is also known as a display core or a display chip, is a microprocessor which is specially used for image operation on a personal computer (PC), a workstation, a game console, and a mobile device such as a tablet computer, a smart phone, and the like.

In one example, each time the browser releases one of the above redundant memory, the browser monitors whether the operating system allocates the memory to the browser successfully. If the operating system allocates the memory to the browser successfully, the process is ended and the browser continues to run. Otherwise, proceed to the step of releasing one of the above redundant memory, to release another redundant memory. It should be noted that the redundant memory released by the browser each time is different from each other.

In another example, each time the browser releases a preset size of redundant memory, the browser monitors whether the operating system allocates the memory to the browser successfully. If the operating system allocates the memory to the browser successfully, the process is ended and the browser continues to run. Otherwise, proceed to the step of releasing the preset size of redundant memory, to release another preset size of the redundant memory. It should be noted that the preset size can be set according to actual needs, which is not limited herein. As an example, the preset size is 300MB.

It can be understood that when the browser releases the redundant memory according to the above two possible implementations, the number of times the redundant memory is released can be counted.

In summary, according to the method provided herein, during the running of the browser, monitor whether the operating system of the terminal running the browser fails to allocate the memory to the browser. Upon monitoring that the operating system fails to allocate the memory to the browser, the redundant memory of the browser is released in time. As such, there will always be sufficient available memory for the browser, which can avoid the slow response or even failure of the browser due to insufficient memory, so as to improve the performance of the browser.

In addition, since the running mode of the browser is determined according to the memory size of the terminal, that is, if the terminal has a relatively large memory, the browser runs in the multi-process mode; otherwise, the browser runs in the single-process and multi-thread mode, which can meet different performance requirements of the browser and is relatively flexible.

However, after the browser releases all the redundant memory or the browser releases the redundant memory more times, a situation that the operating system fails to allocate the memory to the browser may still exist. The following explains how to deal with this situation.

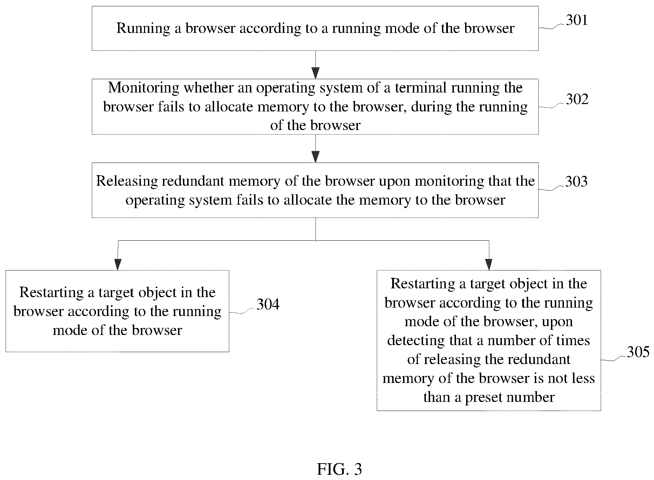

FIG. 3 is a flow chart illustrating a method for memory management for a browser according to other implementations. The method begins at block 301.

At block 301, run the browser.

At block 302, monitor whether an operating system of a terminal running the browser fails to allocate memory to the browser, during running of the browser.

At block 303, redundant memory of the browser is released upon monitoring that the operating system fails to allocate the memory to the browser.

In at least one implementation, the redundant memory includes one or more of the following: memory occupied by a kernel of the browser, memory occupied during picture decoding, memory occupied by scripts, memory occupied by CSS, memory occupied during script parsing, or memory occupied by a GPU.

At block 304, a target object in the browser is restarted according to a running mode of the browser.

"Restarting" refers to a process of closing the target object and then starting the target object. Memory occupied by the target object before restarting is greater than that occupied by the target object after restarting. When the target object is closed, the browser releases all memory occupied by the target object, and when the target object is restarted, the browser reallocates memory to the target object. Since some memory occupied by the target object during the running of the browser may become redundant memory, for example, over time or due to page jump, or the like, the browser does not take into account the above redundant memory when reallocating memory to the target object. As such, memory reallocated to the target object is less than that released by the browser from the target object, and thus can increase the available memory.

For example, during restarting the target object, the memory released by the browser, which is occupied by the target object, is 100MB, and the memory reallocated to the target object by the browser is 20MB.

In the invention, when the running mode of the browser is a multi-process mode, operations at block 304 are implemented as follows. A target process of the browser is restarted, where the target process is a process other than a main process of the browser. In one example, the target process is one or more of following: a renderer process, a third party plug-in process, a GPU process, or the like.

When the main process of the browser is closed, the browser will stop running. However, when a process(es) of the browser other than the main process is closed, the browser will not stop running. Therefore, in implementations of the disclosure, a process(es) of the browser other than the main process is restarted. The following describes the renderer process as an example of the target process. The browser requests memory for the renderer process again after releasing all memory occupied by the renderer process to reload a current page. In addition, when the browser restarts the renderer process, it is also necessary to restore data and message communication in the browser.

In the invention, when the running mode of the browser is a single-process and multi-thread mode, the operations at block 304 are implemented as follows. A target thread of the browser is restarted, where the target thread is a thread other than a main thread of the browser. In one example, the target thread is one or more of the following: a renderer thread, a third party plug-in thread, a GPU thread, or the like.

On condition that the running mode of the browser is the single-process and multi-thread mode, if the process or the main thread of the browser is restarted, the browser may be closed directly. Therefore, in implementations of the disclosure, a thread other than the main thread of the browser is restarted. The following describes the renderer thread as an example of the target thread. The browser requests memory for the renderer thread again after releasing all memory occupied by the renderer thread to reload a current page. In addition, when the browser restarts the renderer thread, it is also necessary to restore data and message communication in the browser.

At block 305, the target object in the browser is restarted according to the running mode of the browser, when the number of times of releasing the redundant memory of the browser is not less than a preset number.

In the invention, prior to performing the operation at block 304, the terminal further detects whether the number of times of releasing the redundant memory of the browser is less than the preset number. When the number of times is greater than or equal to the preset number, the method proceeds to the operation at block 304; otherwise, proceed to release the redundant memory.

The preset number is set according to experience. The discourse is not limited thereto. In one example, the preset number is 5 times. In implementations of the disclosure, each time the redundant memory is released, the browser counts the number of times of releasing the redundant memory. The browser can detect whether the number of times is less than the preset number according to a counted number obtained and the preset number.

Furthermore, the operation at block 305 can be further implemented as follows. When the number of times of releasing is not less than the preset number and it is monitored that the operating system fails to allocate the memory to the browser, the target object in the browser is restarted according to the running mode of the browser. In one example, after detecting that the number of times is not less than the preset number, the browser requests the available memory from the operating system again. If the operating system still fails to allocate the memory to the browser, a memory processing callback function is invoked to send an allocation failure notification to the browser, where the allocation failure notification is for indicating that the operating system fails to allocate the memory to the browser.

In some implementations, prior to restarting the target object in the browser according to the running mode of the browser, the browser first detects whether the number of times of releasing the redundant memory of the browser reaches the preset number and monitors whether the operating system fails to allocate the memory to the browser. Upon detecting that the number of times reaches the preset number and monitors that the operating system fails to allocate the memory to the browser, the browser proceeds to restarting the target object in the browser according to the running mode of the browser. In this way, it is possible to avoid continuing to perform the technical solution provided herein when the available memory is sufficient, which can improve running efficiency of the browser.

It can be understood that the browser may only need to perform any one of the above operation at block 304 or block 305. For example, the browser can perform the operation at block 304 or the operation at block 305, which is not limited herein. The embodiment where only the operation at block 304 is performed is not covered by the claimed invention.

In addition, after the browser restarts the target object, the browser can continue to monitor whether the operating system fails to allocate the memory to the browser. If yes, the browser collects abnormal information and stop running. The above-mentioned abnormal information may include a function (that is, stack information) invoked when the browser stops running, a last page or network address visited by the browser, or the like. The disclosure is not limited thereto.

As such, after the browser releases the redundant memory, it further restarts an object of the browser according to the running mode of the browser. Since the memory occupied by the object will be released when the object is closed and the memory will be reallocated when the object is restarted, and the memory reallocated to the object is less than that released from the object, the available memory can be increased, which can further avoid that the operating system fails to allocate memory to the browser, thereby improving the performance of the browser.

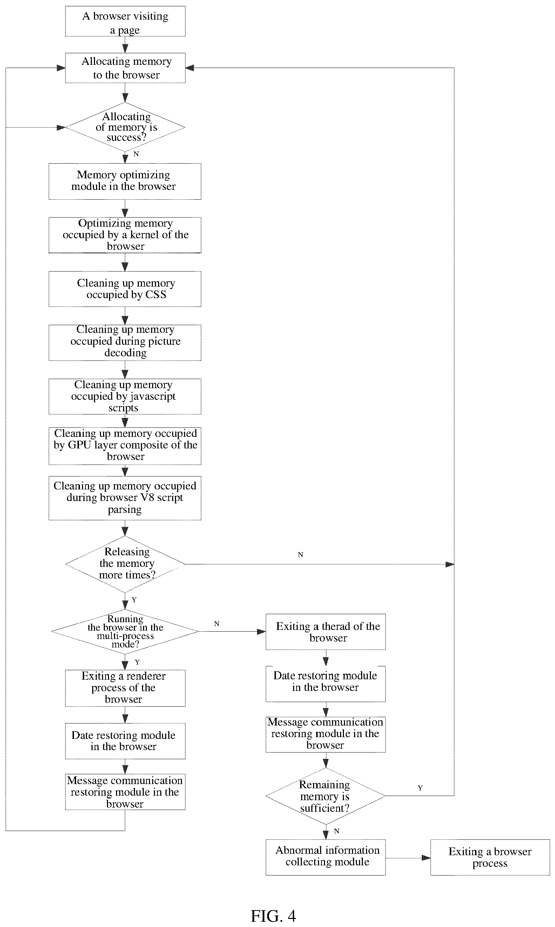

In one example, in combination with FIG. 4, the browser in the terminal starts running and visits a page, and then requests the operating system to allocate memory. The browser monitors whether the operating system allocates the memory to the browser successfully. If the operating system fails to allocate the memory to the browser, a memory optimizing module in the browser responds and performs the following operations sequentially. Memory occupied by the kernel of the browser is optimized. Memory occupied by the CSS is cleared up. Memory occupied during picture decoding is cleared up. Memory occupied by javascript scripts is cleared up. Memory occupied by GPU layer composite of the browser is cleared up. Memory occupied during browser V8 script parsing is cleared up. Thereafter, the browser detects whether the number of times of releasing the redundant memory of the browser reaches the preset number. If the number of times does not reach the preset number and the available memory of the operating system is sufficient, the browser returns to the step of requesting the operating system to allocate memory. On the contrary, if the number of times reaches the preset number and the available memory of the operating system is insufficient, the browser first determines whether the running mode is the multi-process mode. If the running mode is the multi-process mode, the browser restarts one or more processes (such as the renderer process) other than the main process. For example, restarting being performed on the renderer process is taken as an example. The browser exits the renderer process and then restores the data and message communication in the browser. Alternatively, if the running mode is the single-process and multi-thread mode, the browser restarts a thread(s) other than the main thread. The restarting of the thread(s) other than the main thread is similar to that of the renderer process. That is, the browser exits the thread other than the main thread and then restores the data and message communication in the browser. Finally, the browser detects whether the available memory of the operating system is sufficient. If the available memory of the operating system is sufficient, the browser returns to the step of requesting the operating system to allocate memory. On the contrary, if the available memory of the operating system is still insufficient, an abnormal information collecting module in the browser responds and collects abnormal information of the browser, and a browser process can be existed.

The following is a device implementation of the disclosure, which can be configured to implement the method implementations of the disclosure. In this example, the application method is not disclosed. For technical details not described in the device implementation, reference may be made to the method implementations.

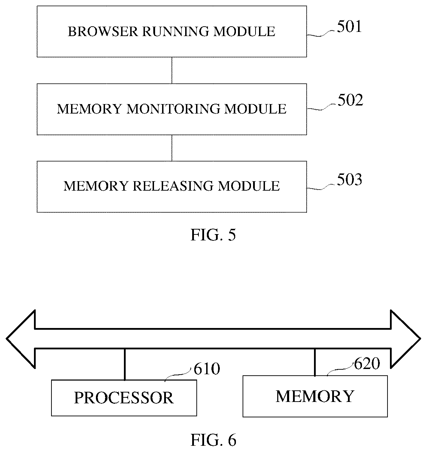

FIG. 5 is a flow chart illustrating a device for memory management for a browser according to implementations. The device has functions for implementing operations in the above method implementations. The functions can be implemented by hardware or by executing corresponding software with the hardware. The device includes a browser running module 501, a memory monitoring module 502, and a memory releasing module 503. The browser running module 501 is configured to run the browser. The memory monitoring module 502 is configured to monitor whether an operating system of a terminal running the browser fails to allocate memory to the browser, during running of the browser. The memory releasing module 503 is configured to release redundant memory of the browser upon monitoring that the operating system fails to allocate the memory to the browser.

As such, according to the technical solutions of the disclosure, during running of the browser, monitor whether an operating system of a terminal running the browser fails to allocate memory to the browser. Upon monitoring that the operating system fails to allocate the memory to the browser, the redundant memory of the browser is released in time. As such, there will always be sufficient available memory for the browser, which can avoid the slow response or even failure of the browser due to insufficient memory, so as to improve the performance of the browser

In at least one implementation based on the implementations in FIG. 5, the redundant memory includes one or more of the following: memory occupied by a kernel of the browser, memory occupied during picture decoding, memory occupied by scripts, memory occupied by CSS, memory occupied during script parsing, or memory occupied by a GPU.

In at least one implementation based on the implementations in FIG. 5, the device further includes a restarting module (not illustrated). The restarting module is configured to restart a target object in the browser according to a running mode of the browser.

In the invention, when the running mode of the browser is a multi-process mode, the restarting module is configured to restart a target process of the browser, where the target process is a process other than a main process of the browser.

In the invention, the running mode of the browser is a single-process and multi-thread mode, the restarting module is configured to restart a target thread of the browser, where the target thread is a thread other than a main thread of the browser.

In the invention, the device further includes a number-of-times detecting module (not illustrated). The number-of-times detecting module is configured to detect whether a number of times of releasing the redundant memory of the browser is less than a preset number. The restarting module is configured to proceed to restarting the target object in the browser according to the running mode of the browser based on a determination that the number of times is not less than the preset number.

In at least one implementation based on the implementations in FIG. 5, the browser running module is configured to: obtain memory information of the terminal upon receiving a running instruction for the browser, where the memory information is indicative of a memory size;
determine a running mode of the browser according to the memory information obtained; run the browser according to the running mode of the browser.

In at least one implementation, the browser running module 501 configured to determine the running mode of the browser according to the memory information obtained is configured to: determine that the running mode of the browser is a multi-process mode when the memory size indicated by the memory information is greater than a first threshold, or determine that the running mode of the browser is a single-process and multi-thread mode when the memory size is less than a second threshold, where the first threshold is greater than the second threshold.

It should be noted that, when the device provided in the above implementations realizes functions of the device, the division of the above functional modules is only used as an example. In actual applications, the above functions can be achieved by different functional modules as required, that is, internal structures of the device is divided into different functional modules to complete all or part of the functions described above. In addition, the device described above and method implementations belong to the same concept, and for technical details not described, reference may be made to the method implementations, which will not be repeated herein.

FIG. 6 is a structural block diagram illustrating a terminal according to implementations. The terminal provided herein may include one or more of the following components: a processor 610 and a memory 620.

The processor 610 may include at least one core processing unit. The processor 610 is configured to connect various parts of the entire terminal through various interfaces and lines, and to execute various functions of the terminal and process data by running or executing instructions, programs, code sets, or instruction sets stored in the memory 620 and invoking data stored in the memory 620. The processor 610 can be implemented in at least one hardware form of digital signal processing (DSP), field programmable gate array (FPGA), and programmable logic array (PLA). For example, the processor 610 can be integrated with a central processing unit (CPU) and/or a modem, where the CPU is mainly configured to handle an operating system, applications, and so on, and the modem is mainly configured to process wireless communication. It will be appreciated that the modem mentioned above can also be implemented by a single chip without being integrated into the processor 610.

The processor 601 is configured to invoke the program instructions stored in the memory 620 to perform the method for memory management for a browser provided by the above-mentioned method implementations.

The memory 620 may include a random access memory (RAM), or may include a read-only memory (ROM). In one example, the memory 620 includes a non-transitory computer-readable storage medium. The memory 620 is configured to store instructions, programs, codes, code sets, or instruction sets. The memory 620 may include a program storage region and a data storage region, where the program storage region is used for storing instructions for implementing the operating system, instructions for at least one function, instructions for implementing the foregoing method implementations, and the like. The data storage region is used for storing data created according to the use of the terminal, and the like.

The structure of the above terminal is only illustrative. In actual implementation, the terminal may include more or fewer components, such as a fingerprint sensor, and the like. The disclosure is not limited thereto.

Those skilled in the art can understand that the structure of the terminal 600 illustrated in FIG. 6 does not constitute any limitation on the terminal. The terminal may include more components than illustrated, or may combine certain components, or may adopt different arrangements of components.

Implementations further provide a computer-readable storage medium. The computer-readable storage medium stores computer programs. The computer programs, when loaded and executed by a processor of a server, are operable with the processor to perform operations in the method implementations described above.

In one example, the above-mentioned computer-readable storage medium can be ROM, a RAM, a CD-ROM, a magnetic tape, a floppy disk, an optical data storage device, etc.

Implementations further provide a computer program product. The computer program product, when executed, is configured to implement the functions of operations in the method implementations described above.

In the description of the disclosure, "multiple/a plurality of/a number of" means two or more than two. The term "and/or" describes relationships of associated objects, indicating that there may be three kinds of relationships, for example, A and/or B can indicate following three situations: A exists alone, A and B exist at the same time, and B exists alone. The character "/" generally indicates that associated objects are in an "or" relationship.

The serial numbers of the foregoing implementations of the disclosure are merely for description, and do not intended to limit the disclosure.

## Claims

1. A method for memory management for a browser, comprising:
running (101) the browser;
monitoring (102, 302) whether an operating system of a terminal running the browser fails to allocate memory to the browser, during running of the browser; and
upon monitoring that the operating system fails to allocate the memory to the browser, releasing redundant memory of the browser multiple times until monitoring that the operating system is able to allocate the memory to the browser, wherein redundant memory released each time has a preset size;
after releasing the redundant memory of the browser, restarting (304) a target object in the browser according to a running mode of the browser, wherein
the running mode of the browser is a multi-process mode and restarting the target object in the browser according to the running mode of the browser comprises:
restarting a target process of the browser, wherein the target process is a process other than a main process of the browser; or
the running mode of the browser is a single-process and multi-thread mode, and restarting the target object in the browser according to the running mode of the browser comprises: restarting a target thread of the browser, wherein the target thread is a thread other than a main thread of the browser;
prior to restarting the target object in the browser according to the running mode of the browser,
detecting whether a number of times of releasing the redundant memory of the browser is less than a preset number; and
proceeding (305) to restarting the target object in the browser according to the running mode of the browser, upon detecting that the number of times is not less than the preset number;
wherein the restarting comprises releasing all memory occupied by the target object and reallocating memory to the target object without reallocating the redundant memory.

2. The method of claim 1, wherein the redundant memory comprises one or more of the following: memory occupied by a kernel of the browser, memory occupied during picture decoding, memory occupied by scripts, memory occupied by cascading style sheets, CSS, memory occupied during script parsing, or memory occupied by a graphics processing unit, GPU.

3. The method of claim 1 or 2, wherein running the browser comprises:
obtaining memory information of the terminal upon receiving a running instruction for the browser, wherein the memory information is indicative of a memory size;
determining a running mode of the browser according to the memory information obtained; and
running (301) the browser according to the running mode of the browser, wherein determining the running mode of the browser according to the memory information comprises one of:
determining that the running mode of the browser is a multi-process mode when the memory size indicated by the memory information is greater than a first threshold; or
determining that the running mode of the browser is a single-process and multi-thread mode when the memory size is less than a second threshold, wherein
the first threshold is greater than the second threshold.

4. A terminal comprising:
a processor (610); and
a memory (620) storing computer programs; wherein
the computer programs, when loaded and executed by the processor, are operable with the processor to perform the method of any of claims 1 to 3.

5. A computer-readable storage medium storing computer programs, wherein the computer programs, when loaded and executed by a processor, are operable with the processor to perform the method of any of claims 1 to 3.

## Patentansprüche

1. Verfahren zur Speicherverwaltung für einen Browser, das Folgendes umfasst:
Ausführen (101) des Browsers;
Überwachen (102, 302), ob ein Betriebssystem eines Endgeräts, auf dem der Browser ausgeführt wird, nicht in der Lage ist, dem Browser beim Ausführen des Browsers Speicher zuzuweisen; und
beim Überwachen, dass das Betriebssystem nicht in der Lage ist, dem Browser Speicher zuzuweisen, mehrmaliges Freigeben von redundantem Speicher des Browsers bis zum Überwachen, dass das Betriebssystem in der Lage ist, dem Browser Speicher zuzuweisen, wobei der bei jedem Mal freigegebene redundante Speicher eine voreingestellte Größe aufweist;
nach Freigeben des redundanten Speichers des Browsers, Neustarten (304) eines Zielobjekts im Browser entsprechend einem Ausführungsmodus des Browsers, wobei der Ausführungsmodus des Browsers ein Multi-Prozess-Modus ist und Neustarten des Zielobjekts im Browser entsprechend dem Ausführungsmodus des Browsers Folgendes umfasst: Neustarten eines Zielprozesses des Browsers, wobei der Zielprozess ein Prozess ist, der von einem Hauptprozess des Browsers verschieden ist; oder
der Ausführungsmodus des Browsers ein Einzel-Prozess- und Multithread-Modus ist und Neustarten des Zielobjekts im Browser entsprechend dem Ausführungsmodus des Browsers Folgendes umfasst: Neustarten eines Zielthreads des Browsers, wobei der Zielthread ein Thread ist, der von einem Hauptthread des Browsers verschieden ist;
vor dem Neustarten des Zielobjekts im Browser entsprechend dem Ausführungsmodus des Browsers,
Detektieren, ob eine Anzahl von Malen des Freigebens des redundanten Speichers des Browsers kleiner als eine voreingestellte Anzahl ist; und
Fortfahren (305) mit dem Neustarten des Zielobjekts im Browser entsprechend dem Ausführungsmodus des Browsers, bei Detektieren, dass die Anzahl von Malen nicht kleiner als die voreingestellte Anzahl ist;
wobei das Neustarten Freigeben allen Speichers, der durch das Zielobjekt belegt wird, und erneutes Zuweisen von Speicher zum Zielobjekt ohne erneutes Zuweisen des redundanten Speichers umfasst.

2. Verfahren nach Anspruch 1, wobei der redundante Speicher eines oder mehrere aus Folgendem umfasst: durch einen Kernel des Browsers belegter Speicher, während der Bilddecodierung belegter Speicher, durch Skripte belegter Speicher, durch kaskadierte Stylesheets, CSS, belegter Speicher, während des Parsens von Skripten belegter Speicher oder durch eine Grafikverarbeitungseinheit, GPU, belegter Speicher.

3. Verfahren nach Anspruch 1 oder 2, wobei Ausführen des Browsers Folgendes umfasst:
Erhalten von Speicherinformationen des Endgeräts bei Empfangen einer Ausführungsanweisung für den Browser, wobei die Speicherinformationen indikativ für eine Speichergröße sind;
Bestimmen eines Ausführungsmodus des Browsers entsprechend den erhaltenen Speicherinformationen; und
Ausführen (301) des Browsers entsprechend dem Ausführungsmodus des Browsers, wobei Bestimmen des Ausführungsmodus des Browsers entsprechend den Speicherinformationen eines aus Folgendem umfasst:
Bestimmen, dass der Ausführungsmodus des Browsers ein Multi-Prozess-Modus ist, wenn die durch die Speicherinformationen angezeigte Speichergröße größer als eine erste Schwelle ist; oder
Bestimmen, dass der Ausführungsmodus des Browsers ein Einzel-Prozess- und Multithread-Modus ist, wenn die Speichergröße kleiner als eine zweite Schwelle ist, wobei die erste Schwelle größer als die zweite Schwelle ist.

4. Endgerät, das Folgendes umfasst:
einen Prozessor (610); und
einen Speicher (620), der Computerprogramme speichert;
wobei
die Computerprogramme, wenn durch den Prozessor geladen und ausgeführt, mit dem Prozessor betreibbar sind, um das Verfahren nach einem der Ansprüche 1 bis 3 durchzuführen.

5. Computerlesbares Speichermedium, das Computerprogramme speichert, wobei die Computerprogramme, wenn durch einen Prozessor geladen und ausgeführt, mit dem Prozessor betreibbar sind, um das Verfahren nach einem der Ansprüche 1 bis 3 durchzuführen.

## Revendications

1. Procédé de gestion de mémoire pour un navigateur, comprenant les étapes consistant à :
exécuter (101) le navigateur ;
déterminer (102, 302) si un système d'exploitation d'un terminal exécutant le navigateur manque à attribuer de la mémoire au navigateur, durant l'exécution du navigateur ; et
lorsqu'il est déterminé que le système d'exploitation manque à attribuer la mémoire au navigateur, libérer la mémoire redondante du navigateur plusieurs fois jusqu'à ce qu'il soit déterminé que le système d'exploitation est capable d'attribuer la mémoire au navigateur, la mémoire redondante libérée à chaque fois ayant une taille prédéfinie ;
après la libération de la mémoire redondante du navigateur, redémarrer (304) un objet cible dans le navigateur en fonction d'un mode d'exécution du navigateur, dans lequel
le mode d'exécution du navigateur est un mode à processus multiples et le redémarrage de l'objet cible dans le navigateur en fonction du mode d'exécution du navigateur consiste à : redémarrer un processus cible du navigateur, le processus cible étant un processus autre qu'un processus principal du navigateur ; ou
le mode d'exécution du navigateur est un mode à processus unique et à fils multiples, et le redémarrage de l'objet cible dans le navigateur en fonction du mode d'exécution du navigateur consiste à : redémarrer un fil cible du navigateur, le fil cible étant un fil autre qu'un fil principal du navigateur ;
avant de redémarrer l'objet cible dans le navigateur en fonction du mode d'exécution du navigateur,
détecter si un nombre de fois où la mémoire redondante du navigateur est libérée est inférieur à un nombre prédéfini ; et
poursuivre (305) en redémarrant l'objet cible dans le navigateur en fonction du mode d'exécution du navigateur, lorsqu'il est détecté que le nombre de fois n'est pas inférieur au nombre prédéfini ;
dans lequel le redémarrage consiste à libérer toute la mémoire occupée par l'objet cible et à réattribuer la mémoire à l'objet cible sans réattribuer la mémoire redondante.

2. Procédé selon la revendication 1, dans lequel la mémoire redondante comprend un ou plusieurs des éléments suivants : mémoire occupée par un noyau du navigateur, mémoire occupée durant un décodage d'image, mémoire occupée par des scripts, mémoire occupée par des feuilles de style en cascade, CSS, mémoire occupée durant l'analyse de scripts, mémoire occupée par une unité de traitement graphique, GPU.

3. Procédé selon la revendication 1 ou 2, dans lequel l'exécution du navigateur comprend les étapes consistant à :
obtenir des informations de mémoire du terminal lors de la réception d'une instruction d'exécution pour le navigateur, les informations de mémoire indiquant une taille de mémoire ;
déterminer un mode d'exécution du navigateur en fonction des informations de mémoire obtenues ; et
exécuter (301) le navigateur en fonction du mode d'exécution du navigateur, la détermination du mode d'exécution du navigateur en fonction des informations de mémoire comprenant une des étapes parmi :
déterminer que le mode d'exécution du navigateur est un mode à processus multiples lorsque la taille de mémoire indiquée par les informations de mémoire est supérieure à un premier seuil ; ou
déterminer que le mode d'exécution du navigateur est un mode à processus unique et à fils multiples lorsque la taille de mémoire est inférieure à un deuxième seuil,
dans lequel
le premier seuil est supérieur au deuxième seuil.

4. Terminal comprenant :
un processeur (610) ; et
une mémoire (620) stockant des programmes informatiques ; dans lequel
les programmes informatiques, lorsqu'ils sont chargés et exécutés par le processeur, peuvent fonctionner avec le processeur pour effectuer le procédé selon l'une quelconque des revendications 1 à 3.

5. Support de stockage lisible par ordinateur stockant des programmes informatiques, les programmes informatiques, lorsqu'ils sont chargés et exécutés par un processeur, pouvant fonctionner avec le processeur pour effectuer le procédé selon l'une quelconque des revendications 1 à 3.
